# FASCICULE DE BREVET EUROPEEN

(11) **EP 2 102 054 B1**
(45) Date de publication et mention de la délivrance du brevet: **07.03.2012**
(21) Numéro de dépôt: 08761770.0
(22) Date de dépôt: 16.01.2008
(51) Int. Cl.: B62D 25/08, B60K 11/04

(54) **FACE AVANT DE VEHICULE AUTOMOBILE.**
VORDERFLÄCHE FÜR EIN KRAFTFAHRZEUG
MOTOR VEHICLE FRONT FACE

(30) Priorité: 19.01.2007 FR 0752783
(43) Date de publication de la demande: 23.09.2009
(73) Titulaire: Faurecia Bloc Avant, 92000 Nanterre (FR)
(72) Inventeur: RIVIERE, Caroline, F-25700 Valentigney (FR)
(74) Mandataire: Domenego, Bertrand
(86) Numéro de dépôt international: PCT/FR2008/000050
(87) Numéro de publication internationale: WO 2008/107541

(56) Documents cités:
- EP-A2- 1 072 501
- FR-A1- 2 820 710
- FR-A1- 2 833 559
- FR-A1- 2 833 920

## Description

L'invention concerne en général une face avant de véhicule automobile.

Plus précisément, l'invention concerne, selon un premier aspect, une face avant de véhicule automobile selon le préambule de la revendication 1.

Les faces avant de ce type connues de l'état de la technique sont très lourdes.

De telles faces avant sont décrites par exemple par EP-A-1 072 501 et FR-A-2 833 559.

Dans ce contexte, l'invention vise à proposer une face avant plus légère, plus simple et avec des coûts de fabrication réduits.

A cette fin, l'invention porte sur une face avant selon la revendication 1, dont l'élément en forme de U est un élément tubulaire.

La face avant peut également présenter une ou plusieurs des caractéristiques ci-dessous, considérées individuellement ou selon toutes les combinaisons techniquement possibles :
- les moyens de liaison amovible de la cassette à l'élément en forme de U comprennent des pinces formées sur la cassette et aptes à coopérer avec l'élément en forme de U ;
- les moyens de liaison amovible de la cassette à l'élément en forme de U comprennent au moins deux pinces latérales aptes à coulisser le long des montant latéraux de l'élément en forme de U, et au moins une pince inférieure apte à se verrouiller de manière amovible sur la poutre inférieure ;
- les moyens de liaison amovible de la cassette à l'élément en forme de U sont frangibles en cas de choc sur la cassette d'énergie supérieure à une limite prédéterminée;
- la cassette est une pièce en matière plastique injectée ; et
- la traverse supérieure comprend des moyens de blocage de la cassette suivant une direction sensiblement parallèle aux montants.

Selon un second aspect, l'invention porte sur un ensemble de faces avant présentant les caractéristiques ci-dessous, pour des première et seconde séries de véhicules équipés respectivement de première et seconde motorisations différentes l'une de l'autre, cet ensemble étant conforme à la revendication 8.

Selon un troisième aspect, l'invention porte sur un procédé d'assemblage de faces avant présentant les caractéristiques ci-dessus, pour des première et seconde séries de véhicules équipés respectivement de première et seconde motorisations différentes l'une de l'autre, le procédé étant conforme à la revendication 9.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective d'une face avant conforme à l'invention, considérée d'avant en arrière ;

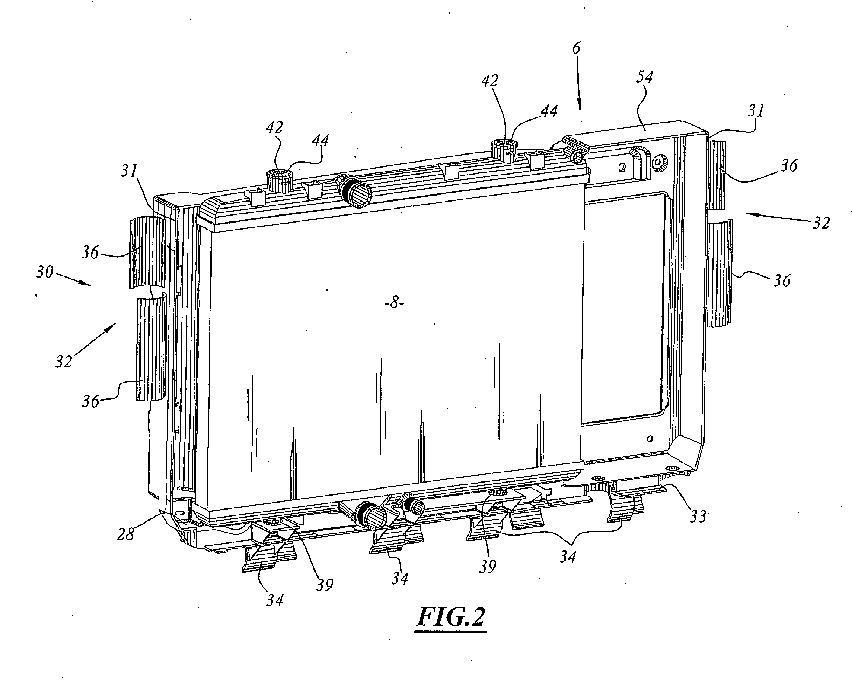

- la figure 2 est une vue en perspective de la cassette et du radiateur de la face avant de la figure 1, vus de derrière ;
- la figure 3 est une vue agrandie, de côté, d'une partie inférieure de la cassette et du radiateur de la figure 2 ;
- la figure 4 est une vue en perspective, considérée d'arrière en avant, d'une étape de montage de la face avant, au cours de laquelle la cassette et le radiateur de la figure 2 sont montés sur un tube de support en U ;
- la figure 5 est une vue en perspective, considérée d'avant en arrière, d'une autre étape de montage de la face avant, au cours de laquelle une traverse supérieure est fixée sur le tube en U de la figure 4 ; et
- la figure 6 est une vue en perspective d'un détail de la figure 5 montrant les moyens de fixation de la traverse supérieure sur le tube en U, considéré sous un autre angle.

Dans la description qui va suivre, l'avant, l'arrière, la direction transversale, la gauche et la droite seront entendus relativement à la direction normale de déplacement du véhicule.

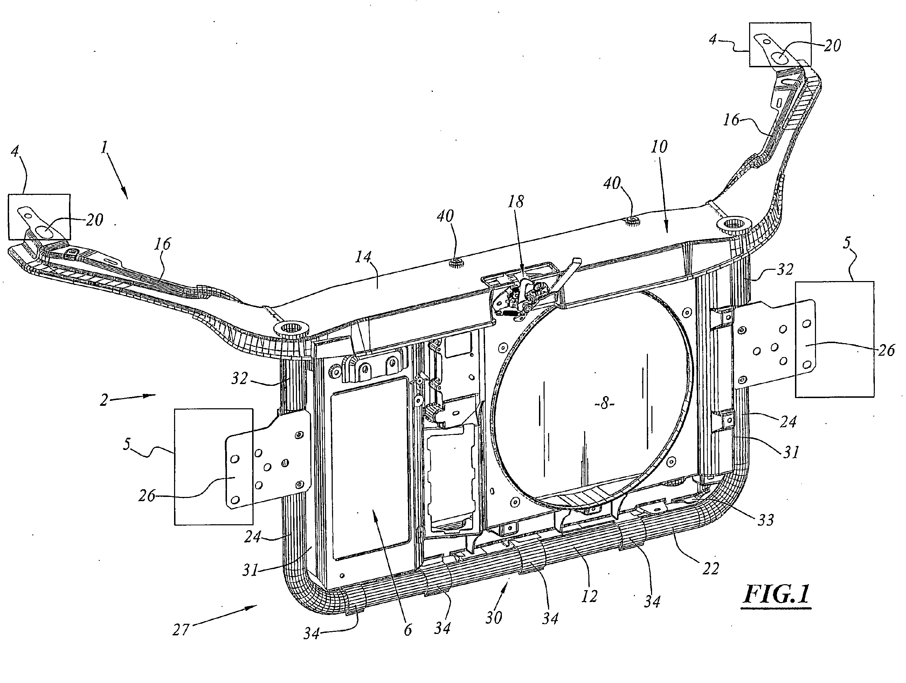

La face avant 1 représentée sur la figure 1 comprend une structure 2 destinée à être fixée sur des éléments de caisse 4, 5 du véhicule, une cassette de support 6 et un radiateur 8.

La structure 2 comprend une traverse supérieure sensiblement transversale 10, et un tube en U 12 fixé sous la traverse supérieure 10 et s'étendant dans un plan sensiblement vertical et transversal. La traverse supérieure 10 présente une partie centrale transversale 14 et deux bras latéraux 16 prolongeant la partie centrale 14 par ses deux extrémités. La partie centrale 14 présente une forme de gouttière ouverte vers le bas, s'étendant transversalement. Elle porte la serrure 18 de verrouillage du capot du véhicule. Les ailes 16 s'étendent chacune vers l'arrière et vers l'extérieur du véhicule à partir de la partie 14, et portent à leurs extrémités respectives 20 des orifices de fixation de la traverse sur les ailes 4 du véhicule.

Le tube 12 est un tube creux de section circulaire, cintré en U. Il comporte une poutre inférieure transversale 22 et deux montants latéraux 24 sensiblement verticaux liant des extrémités opposées de la poutre inférieure 22 à la partie centrale 14 de la traverse supérieure. Les montants 24 sont susceptibles d'être fixés aux longerons 5 du véhicule par l'intermédiaire de platines 26 rapportées sur les montants 24.

La traverse supérieure 10 et la poutre inférieure 22 sont sensiblement parallèles l'une à l'autre, les deux montants latéraux 24 étant également parallèles l'un à l'autre, de telle sorte que la partie centrale 14 de la traverse et le tube 12 forment sensiblement un cadre 27 rectangulaire vertical.

La cassette 6 est une pièce en matière plastique injectée. Elle présente une forme générale rectangulaire, de dimensions légèrement inférieures à celles de l'espace interne délimité par le cadre 27. Le cadre 6 comporte en partie inférieure une marche transversale 28 de support du radiateur 8.

La cassette 6 comporte également des moyens de fixation au radiateur 8. Ces moyens comportent des "silent blocks" inférieurs 39 fixés sur la marche 28, dans lesquels viennent s'engager des ergots formés sur le radiateur 8. Ils comportent également des agrafes de maintien (non représentées), aptes à maintenir le radiateur 8 en place par rapport à la cassette 6 de manière provisoire, en attente d'une fixation définitive intervenant lors du montage de la traverse supérieure sur le tube en U.

La face avant comporte par ailleurs des moyens 30 de liaison amovibles de la cassette 6 du tube 12. Ces moyens 30 comportent des pinces latérales et des pinces inférieures, formées sur la cassette 6, et aptes à coopérer avec le tube 12. La cassette 6 porte le long de chacun de ses deux bords verticaux 31 opposés une unique pince 32, destinée à coopérer avec un des montants 24 du tube. Elle porte par ailleurs, le long de son bord transversal inférieur 33, quatre pinces inférieures 34, régulièrement réparties le long de ce bord inférieur, et destinées à coopérer avec la poutre 22.

Chacune des pinces 32 comporte deux mors 36 décalés l'un par rapport à l'autre le long du bord de la cassette. Les deux mors 36 présentent des formes de secteurs de cylindre, coaxiaux, et de rayon interne légèrement supérieur au rayon externe du montant 24 correspondant. Considérés perpendiculairement à leur axe, les deux mors 36 forment un arc de cercle de 300° environ, ouvert à l'opposé de la cassette 6.

Les pinces 34 présentent la même structure, mais les mors de chacune des pinces 34 présentent une longueur axiale plus courte que les mors 36 des pinces 32.

Les moyens 30 de liaison amovible de la cassette 6 au tube 12 sont frangibles quand la cassette subit un choc d'énergie supérieure à une limite prédéterminée, par exemple les chocs normalisés connus sous le nom de "choc réparabilité" ou "choc piéton".

La traverse supérieure 10 est par exemple réalisée par surmoulage d'une partie en matière plastique autour d'un insert métallique.

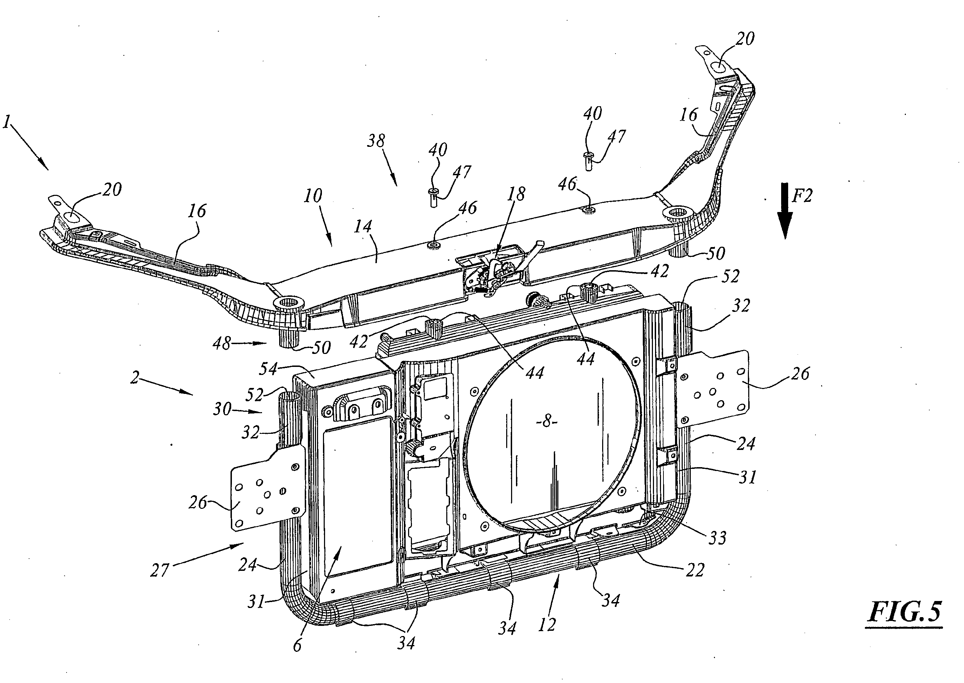

Comme le montre la figure 5, la traverse supérieure 10 comporte des moyens 38 de blocage suivant la direction verticale de la cassette 6 par rapport au tube en U. Ces moyens 38 comprennent par exemple deux pions 40 susceptibles de venir s'engager dans des trous 42 dés "silent blocks" supérieurs 44 fixés sur le bord supérieur du radiateur 8. Les pions 40 traversent des orifices 46 ménagés dans la partie centrale de la traverse supérieure. Ils sont bloqués suivant la direction verticale dans les orifices 46 par des pattes 47 ménagées sur les fûts des pions 40 et coopérant avec des fentes latérales découpées dans les parois périphériques des orifices 46, ou par clipsage ou par un quart de tour, ou encore par baïonnette.

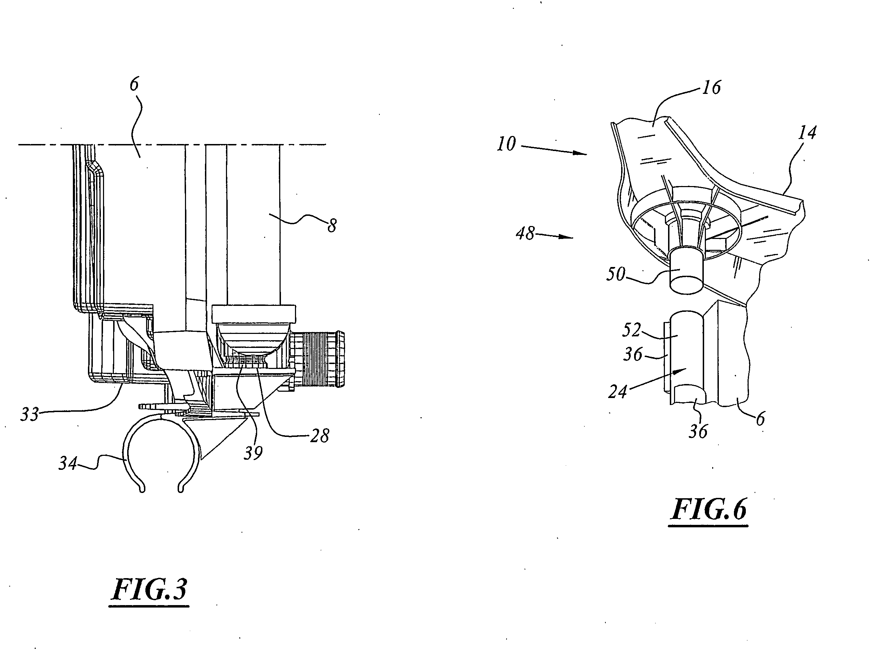

Les moyens 48 de liaison entre le tube 12 et la traverse supérieure 10 (figure 6) comprennent, pour chaque montant 24, un manchon 50 apte à s'emmancher dans l'extrémité libre 52 du montant, et un organe de verrouillage non représenté.

Le manchon 50 est typiquement surmoulé sur l'insert métallique de la traverse supérieure. Il pointe verticalement sous la traverse supérieure, et présente un diamètre légèrement inférieur au diamètre interne du tube 12.

Les moyens de verrouillage du manchon 50 dans l'extrémité 52 comprennent par exemple une vis apte à se visser dans des orifices filetés ménagés dans le manchon 50 et l'extrémité 52, et placés en coïncidence l'un avec l'autre quand le manchon est engagé dans l'extrémité 52.

La taille de l'espace interne délimité par le cadre définit la hauteur et la largeur transversale de la cassette. Ces dimensions sont choisies suffisamment grandes pour que la cassette puisse recevoir à fixation le radiateur correspondant à la motorisation la plus puissante de la gamme de véhicule sur laquelle la face avant doit être montée. Ainsi, il est possible de prévoir, pour les faces avant destinées à tous les véhicules d'une même plateforme, d'utiliser la même traverse supérieure et le même tube en U, les cassettes en revanche étant différentes en fonction de la motorisation du véhicule. Les cassettes correspondant aux différentes motorisations présentent toutes la même forme générale, c'est-à-dire la même hauteur et la même largeur transversale. En revanche, elles sont de conception différente, notamment pour les moyens de support et de fixation du radiateur, ces moyens étant adaptés à la taille du radiateur et donc à la motorisation.

Ceci est particulièrement avantageux quand on assemble sur une même ligne de production des faces avant destinées à des véhicules d'une même plateforme mais équipés de motorisations différentes.

Le procédé d'assemblage d'un ensemble de faces avant du type décrit ci-dessus, destiné à équiper des première et seconde séries de véhicules d'une même plateforme équipés respectivement de première et seconde motorisations différentes l'une de l'autre va maintenant être décrit.

On approvisionne d'abord des tubes en forme de U 12 tous identiques et des traverses supérieures 10 toutes identiques.

On approvisionne ensuite des premières cassettes 6 adaptées à la première motorisation et des secondes cassettes 6 adaptées à la seconde motorisation. Les premières et secondes cassettes 6 présentent la même forme générale mais sont de conceptions différentes l'une de l'autre, de manière à pouvoir recevoir les radiateurs adaptés aux première et seconde motorisations.

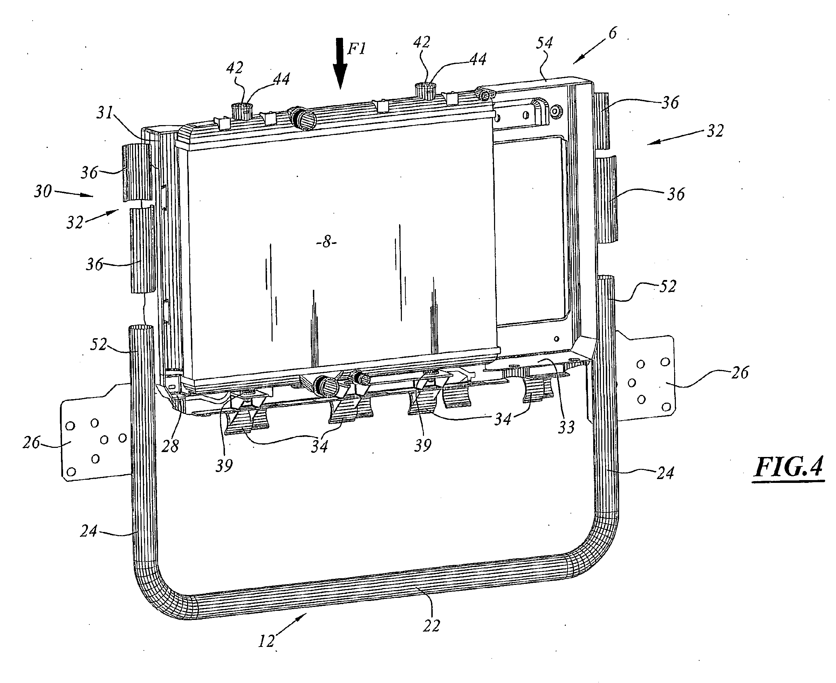

On assemble ensuite les faces avant destinées aux véhicules de la première série, chaque face avant étant assemblée comme décrit ci-dessous en référence aux figures 4 et 5.

Le radiateur 8 adapté à la première motorisation est d'abord fixé sur la première cassette 6. Il repose sur la marche 28 et est rigidement fixé sur la cassette par des moyens adaptés. Il présente une hauteur sensiblement égale à celle de la cassette, et une largeur transversale inférieure à celle de la cassette. Il est situé pratiquement entièrement en regard de la cassette 6.

Puis, comme le montre la figure 4, la cassette 6 est montée sur le tube en U 12. A cette fin, la cassette 6 est disposée au-dessus du tube en U, suivant une orientation telle que la cassette 6 et le tube 12 sont situés dans un même plan. Le tube 12 est disposé de telle sorte que les montants 24 pointent vers le haut, c'est-à-dire vers la cassette 6, suivant l'axe des pinces latérales 32. La cassette 6 est ensuite déplacée verticalement vers le bas, suivant la flèche F1 de la figure 4, de telle sorte que les mors 36 des pinces latérales viennent se placer de part et d'autre des montants 24. Au cours de ce mouvement, les mors 36 coulissent axialement le long des montants 24. Les mors 36 bloquent la cassette 6 par rapport au tube 12 vers l'avant et vers l'arrière, mais laissent la cassette libre par rapport au tube suivant la direction verticale, c'est-à-dire parallèlement aux montants 24.

A la fin de la course verticale de la cassette 6, les pinces inférieures 34 viennent se verrouiller sur la poutre inférieure 22 du tube. Les deux mors de chaque pince 34 franchissent la poutre 22 en s'écartant l'un de l'autre par flexion, et viennent se placer l'un vers l'avant et l'autre vers l'arrière autour de la poutre 22.

Dans cette situation, les bords verticaux 31 de la cassette s'étendent à proximité et le long des montants 24 du tube. Le bord inférieur 33 de la cassette s'étend à proximité et le long de la poutre inférieure 22 du tube. Le bord transversal supérieur 54 de la cassette, comme le montre la figure 5, s'étend légèrement au-dessus des extrémités libres 52 des montants.

La traverse supérieure 10 est ensuite rapportée sur le tube 12. Comme le montre la figure 5, la traverse supérieure 10 est d'abord placée au-dessus de l'ensemble formé par la cassette et le tube, de telle sorte que les manchons 50 pointent vers le bas, exactement selon l'axe central des montants 24. La traverse supérieure 10 est ensuite déplacé verticalement vers le bas (flèche F2) de la figure 5 jusqu'à ce que les manchons 50 soient complètement emmanchés dans les extrémités libres 52 des montants. Les orifices taraudés respectifs des manchons 50 et des extrémités libres 52 sont alors en coïncidence, et la traverse est verrouillée sur le tube en vissant des vis non représentées dans ces orifices. La partie centrale 14 de la traverse est alors en appui sur les "silent blocks" supérieurs 44 du radiateur.

De manière à bloquer la cassette 6 parallèlement aux montants 24 et à maintenir la cassette 6 dans le plan du tube en U 12, les pions 40 sont engagés à travers les orifices 46 de la traverse supérieure dans les trous 42 ménagés dans les "silent blocks" 44. Les pattes 47 verrouillent ces pions dans les orifices 46 parallèlement aux montants 24.

Une fois montées les faces avant destinées aux véhicules de la première série, on assemble les faces avant destinées aux véhicules de la seconde série. La procédure est exactement la même que celle qui a été décrite ci-dessus pour les faces avant destinées aux véhicules de la première série, à l'exception du fait qu'on utilise des radiateurs adaptés à la seconde motorisation, et qu'on utilise les secondes cassettes à la place des premières cassettes. En revanche, on utilise les mêmes tubes en U et les mêmes traverses supérieures que pour les faces avant destinées aux véhicules de la première série. En variante, il est possible de ne pas monter toutes les faces avant destinées aux véhicules de la première série avant de commencer à monter les faces avant destinées aux véhicules de la seconde série. Il est possible de monter d'abord une ou plusieurs faces avant destinées aux véhicules de la première série, puis une ou plusieurs faces avant destinées aux véhicules de la seconde série, puis de nouveau une ou plusieurs faces avant destinées aux véhicules de la première série, et de continuer ainsi alternativement à monter des faces avant destinées aux véhicules des première et seconde séries. Ceci est particulièrement facile du fait que les tubes en U et les traverses supérieures sont identiques pour les faces avant des véhicules des deux séries.

La face avant décrite ci-dessus présente de multiples avantages.

La cassette est assemblée au cadre par cerclage de la cassette par le cadre, au sens où la cassette est placée dans l'espace intérieur délimité par le cadre, et où le cadre est apte à maintenir la cassette au moins dans quatre directions opposées deux à deux, par exemple ici vers la droite, la gauche, le haut et le bas. Du fait de ce mode d'assemblage de la cassette et du cadre, il est possible de rendre la cassette non structurelle, au sens où la cassette ne fait pas partie de la structure mécanique rigide de la face avant du véhicule. Cette structure rigide est constituée par la traverse supérieure et par le tube en U. Il devient alors possible de conférer à la cassette une structure plus légère, et donc de réaliser un gain de poids sur la face avant.

L'ensemble des efforts appliqués à la cassette est repris directement sur le tube en U, qui est lui-même une structure particulièrement rigide.

Par ailleurs, la traverse supérieure et le tube en U sont communs à tout ou partie des véhicules d'une même plateforme. Seule la cassette est différente entre les faces avant destinées aux différents véhicules d'une même plateforme. Plus précisément, la conception de la cassette est différente en fonction de la motorisation du véhicule, ses dimensions générales restant les mêmes.

L'élément en forme de U est avantageusement constitué d'un tube cintré à section fermée, de forme et de réalisation relativement simples. Les coûts de fabrication de la face avant peuvent ainsi être réduits.

Du fait que la traverse supérieure et le tube en U, qui constituent la structure rigide de la face avant, sont communs à tous les véhicules de la plateforme, cette structure peut être validée par calculs en une seule fois pour toute la plateforme.

De plus, en cas de dégradation de la face avant du fait d'un choc, il est possible de ne changer que la cassette et de conserver la traverse et le tube en U, du fait que les moyens de liaison entre la cassette et le tube sont frangibles.

Le démontage de la cassette, en vue de son remplacement ou de son entretien, est particulièrement simple. Il suffit de séparer la traverse supérieure du tube en U, de déclipper les pinces inférieures 34 par rapport à la poutre inférieure 22 suivant un mouvement vertical, puis de faire coulisser la cassette le long des montants 24 du tube en U suivant un mouvement vertical vers le haut.

La face avant décrite ci-dessus peut présenter de multiples variantes.

Le tube en U et la traverse supérieure peuvent être communs à tout ou partie des véhicules de la plateforme.

L'élément en forme de U peut être constitué d'un unique tube cintré, ou de plusieurs tubes assemblés les uns aux autres, ou même de plusieurs éléments, par exemple des profilés, assemblés les uns aux autres. Au cas où cet élément en U est un tube, celui-ci peut présenter une section ronde ou carrée ou tout type de section adapté.

Les moyens de liaison entre la cassette et le tube peuvent être de tout type. Par exemple, la cassette peut ne pas être liée au tube par des pinces mais plutôt par des vis.

Le nombre de points de liaison entre la cassette et le tube, le long des montants et le long de la poutre inférieure, peut être variable.

Les moyens de liaison entre la traverse supérieure et le tube en U peuvent être de tout type. La traverse peut être vissée ou rivetée sur le tube en U, par exemple.

Les moyens de liaison entre la cassette et le tube peuvent ne pas être frangibles.

La cassette peut ne pas supporter un radiateur, mais plutôt un condenseur du circuit de climatisation du véhicule, ou à la fois le radiateur et le condenseur. Elle peut aussi supporter d'autres éléments, tels que des volets mobiles du circuit de ventilation du véhicule, des faisceaux électrique, des capteurs, etc....

Il est à noter que pour deux véhicules d'une même plateforme, de styles différents (par exemple un monospace et une berline, ou une berline et un coupé) mais de motorisations identiques, il est aussi possible d'utiliser la même cassette avec le même tube en U, mais avec une traverse supérieure différente du fait de la modification de la silhouette du véhicule (les éléments de caisse 4 sont modifiés).

## Revendications

1. Face avant de véhicule automobile, la face (1) avant comprenant une structure (2) destinée à être fixée sur des éléments de caisse (4, 5) du véhicule, une cassette (6), et au moins un élément de refroidissement (8) du moteur lié à la cassette (6) choisi parmi un radiateur ou un condenseur, la structure (2) comprenant :
- une traverse supérieure (10) transversale,
- un élément (12) en forme de U fixé sous la traverse supérieure (10) et comportant une poutre inférieure (22) transversale et deux montants latéraux (24) liant la poutre inférieure (22) à la traverse supérieure (10), l'élément (12) en forme de U formant avec la traverse supérieure (10) un cadre (27) auquel est liée la cassette (6), la cassette (6) étant assemblée au cadre (27) par cerclage de la cassette (6) par le cadre (27),
**caractérisée en ce que** l'élément (12) en forme de U est un élément tubulaire.

2. Face avant selon la revendication 1 , **caractérisée en ce qu'**elle comprend des moyens (30) de liaison amovible de la cassette (6) à l'élément (12) en forme de U.

3. Face avant selon la revendication 2, **caractérisée en ce que** les moyens (30) de liaison amovible de la cassette (6) à l'élément (12) en forme de U comprennent des pinces (32, 34) formées sur la cassette (6) et aptes à coopérer avec l'élément (12) en forme de U.

4. Face avant selon la revendication 3, **caractérisée en ce que** les moyens (30) de liaison amovible de la cassette (6) à l'élément (12) en forme de U comprennent au moins deux pinces latérales (32) aptes à coulisser le long des montant latéraux (24) de l'élément (12) en forme de U, et au moins une pince inférieure (34) apte à se verrouiller de manière amovible sur la poutre inférieure (22).

5. Face avant selon l'une quelconque des revendications 2 à 4, **caractérisée en ce que** les moyens (30) de liaison amovible de la cassette (6) à l'élément (12) en forme de U sont frangibles en cas de choc sur la cassette (6) d'énergie supérieure à une limite prédéterminée.

6. Face avant selon l'une quelconque des revendications 1 à 5, **caractérisée en ce que** la cassette (6) est une pièce en matière plastique injectée.

7. Face avant selon l'une quelconque des revendications 1 à 6, **caractérisée en ce que** la traverse supérieure (10) comprend des moyens (38) de blocage de la cassette (6) suivant une direction sensiblement parallèle aux montants (24).

8. Ensemble de faces (1) avant conformes à l'une quelconque des revendications précédentes, pour des première et seconde séries de véhicules équipées respectivement de première et seconde motorisations différentes l'une de l'autre,
- les faces avant (1) pour les véhicules de la première série comprenant chacune une traverse supérieure (10), un élément (12) en forme de U et une première cassette (6) adaptée à la première motorisation,
- les faces avant (1) pour les véhicules de la seconde série comprenant chacune une traverse supérieure (10), un élément (12) en forme de U et une seconde cassette (6) adaptée à la seconde motorisation,
les première et seconde cassettes (6) étant différentes l'une de l'autre, les éléments (12) en forme de U des faces avant (1) pour les véhicules des première et seconde séries étant tous identiques, et les traverses supérieures (10) des faces avant (1) pour les véhicules des première et seconde séries étant toutes identiques.

9. Procédé d'assemblage de faces avant (1) conformes à l'une quelconque des revendications 1 à 8, pour des première et seconde séries de véhicules équipées respectivement de première et seconde motorisations différentes l'une de l'autre, le procédé comprenant les étapes suivantes :
- approvisionner des éléments (12) en forme de U tous identiques et des traverses supérieures (10) toutes identiques,
- approvisionner au moins une première cassette (6) adaptée à la première motorisation et au moins une seconde cassette (6) adaptée à la seconde motorisation, les première et seconde cassettes (6) étant différentes l'une de l'autre,
- assembler au moins une face avant (1) destinée à un véhicule de la première série, en fixant la ou chaque première cassette (6) à un desdits éléments (12) en forme de U, puis fixer audit élément en forme de U une desdites traverses supérieures (10) ; et
- assembler au moins une face avant (1) destinée à un véhicule de la seconde série, en fixant la ou chaque seconde cassette (6) à un desdits éléments (12) en forme de U, puis fixer audit élément (12) en forme de U une desdites traverses supérieures (10).

## Claims

1. A motor vehicle front-end panel, the front-end panel (1) comprising a structure (2) to be fixed to body elements (4, 5) of the vehicle, a cassette (6) and at least one cooling element (8) for cooling the engine which is connected to the cassette (6) and chosen from a radiator or a condenser, the structure (2) comprising:
- an upper transverse crossmember (10),
- a U-shaped element (12) fixed beneath the upper crossmember (10) and comprising a lower transverse beam (22) and two side struts (24) connecting the lower beam (22) to the upper crossmember (10), the U-shaped element (12) and the upper crossmember (10) forming a frame (27) to which the cassette (6) is attached, the cassette (6) being attached to the frame (27) by fitting the frame (27) around the cassette (6), **characterized in that** the U-shaped element (12) is a tubular element.

2. A front-end panel as claimed in claim 1 **characterized in that** it comprises removable means (30) for connecting the cassette (6) to the U-shaped element (12).

3. A front-end panel as claimed in claim 2, **characterized in that** the removable means (30) for connecting the cassette (6) to the U-shaped element (12) comprise clips (32, 34) formed on the cassette (6) and able to cooperate with the U-shaped element (12).

4. A front-end panel as claimed in claim 3, **characterized in that** the removable means (30) for connecting the cassette (6) to the U-shaped element (12) comprise at least two lateral clips (32) able to slide along the side struts (24) of the U-shaped element (12) and at least one lower clip (34) able to be locked in a removable manner to the lower beam (22).

5. A front-end panel as claimed in any one of claims 2 to 4, **characterized in that** the removable means (30) for connecting the cassette (6) to the U-shaped element (12) are frangible in the event of an impact on the cassette (6) having an energy which is greater than a pre-determined limit.

6. A front-end panel as claimed in any one of claims 1 to 5, **characterized in that** the cassette (6) is a part made of injection-molded plastics material.

7. A front-end panel as claimed in any one of claims 1 to 7, **characterized in that** the upper crossmember (10) comprises means (38) for blocking the cassette (6) in a direction which is substantially parallel to the struts (24).

8. A set of front-end panels (1) as claimed in any one of the preceding claims, for the first and second series of vehicles respectively provided with first and second engine specifications which are different from one another,
- the front-end panels (1) for the vehicles of the first series each comprising an upper crossmember (10), a U-shaped element (12) and a first cassette (6) adapted to the first engine specification,
- the front-end panels (1) for the vehicles of the second series each comprising an upper crossmember (10), a U-shaped element (12) and a second cassette (6) adapted to the second engine specification,
the first and second cassettes (6) being different from one another, the U-shaped elements (12) of the front-end panels (1) for the vehicles of the first and second series all being identical, and the upper crossmembers (10) of the front-end panels (1) for the vehicles of the first and second series all being identical.

9. A method for assembling front-end panels (1) as claimed in any one of claims 1 to 7, for the first and second series of vehicles respectively equipped with first and second engine specifications which are different from one another, the method comprising the following steps:
- providing U-shaped elements (12) which are all identical and upper crossmembers (10) which are all identical,
- providing at least one first cassette (6) adapted to the first engine specification and at least one second cassette (6) adapted to the second engine specification, the first and second cassettes (6) being different from one another,
- assembling at least one front-end panel (1) intended for a vehicle of the first series, by fixing the, or each, first cassette (6) to one of said U-shaped elements (12) and then fixing one of said upper crossmembers (10) to said U-shaped element; and
- assembling at least one front-end panel (1) intended for a vehicle of the second series, by fixing the, or each, second cassette (6) to one of said U-shaped elements (12), and then fixing one of said upper crossmembers (10) to said U-shaped element (12).

## Patentansprüche

1. Frontpartie (1) für ein Kraftfahrzeug, mit einem Aufbau (2), der dazu bestimmt ist, an Aufbauelementen (4, 5) des Fahrzeugs befestigt zu werden, mit einer Kassette (6) und mit mindestens einem mit der Kassette (6) verbundenen Element (8) zum Kühlen des Motors, das unter einem Kühler oder einem Kondensator ausgewählt ist, wobei der Aufbau (2) folgendes aufweist:
- einen quer verlaufenden oberen Träger (10),
- ein U-förmiges Element (12), das unter dem oberen Träger (10) befestigt ist und eine quer verlaufende untere Strebe (22) aufweist sowie zwei seitliche Stützen (24) aufweist, welche die untere Strebe (22) mit dem oberen Träger (10) verbinden, wobei das U-förmige Element (12) mit dem oberen Träger (10) einen Rahmen (27) bildet, mit dem die Kassette (6) verbunden ist, und wobei die Kassette (6) an dem Rahmen (27) angebracht ist, indem die Kassette (6) von dem Rahmen (27) umschlossen ist,
**dadurch gekennzeichnet,**
**dass** das U-förmige Element (12) ein rohrförmiges Element ist.

2. Frontpartie nach Anspruch 1,
**dadurch gekennzeichnet,**
**dass** sie Einrichtungen (30) zum lösbaren Verbinden der Kassette (6) mit dem U-förmigen Element (12) aufweist.

3. Frontpartie nach Anspruch 2,
**dadurch gekennzeichnet,**
**dass** die Einrichtungen (30) zum lösbaren Verbinden der Kassette (6) mit dem U-förmigen Element (12) Klemmen (32, 34) aufweisen, die an der Kassette (6) ausgebildet sind und dazu geeignet sind, mit dem U-förmigen Element (12) zusammenzuwirken.

4. Frontpartie nach Anspruch 3,
**dadurch gekennzeichnet,**
**dass** die Einrichtungen (30) zum lösbaren Verbinden der Kassette (6) mit dem U-förmigen Element (12) mindestens zwei seitliche Klemmen (32) aufweisen, die entlang den seitlichen Stützen (24) des U-förmigen Elementes (12) gleitend verschiebbar sind, und mindestens eine untere Klemme (34) aufweisen, die auf lösbare Weise an der unteren Strebe (22) verriegelbar ist.

5. Frontpartie nach einem der Ansprüche 2 bis 4,
**dadurch gekennzeichnet,**
**dass** die Einrichtungen (30) zum lösbaren Verbinden der Kassette (6) mit dem U-förmigen Element (12) dazu ausgelegt sind, zu brechen, wenn eine Stoßkraft mit einer über einem vorgegebenen Grenzwert liegenden Energie auf die Kassette (6) einwirkt.

6. Frontpartie nach einem der Ansprüche 1 bis 5,
**dadurch gekennzeichnet,**
**dass** die Kassette (6) ein Spritzgussteil aus einem Kunststoffmaterial ist.

7. Frontpartie nach einem der Ansprüche 1 bis 6,
**dadurch gekennzeichnet,**
**dass** der obere Träger (10) Einrichtungen (38) zum Blockieren der Kassette (6) in einer zu den Stützen (24) im Wesentlichen parallelen Richtung aufweist.

8. Satz von Frontpartien (1) nach einem der vorherigen Ansprüche für eine erste und eine zweite Serie von Fahrzeugen mit voneinander verschiedenen Motorausrüstungen, wobei
- wobei die Frontpartien (1) für die Fahrzeuge der ersten Serie jeweils einen oberen Träger (10), ein U-förmiges Element (12), sowie eine an die erste Motorausrüstung angepasste erste Kassette (6) aufweisen,
- wobei die Frontpartien (1) für die Fahrzeuge der zweiten Serie jeweils einen oberen Träger (10), ein U-förmiges Element (12), sowie eine an die zweite Motorausrüstung angepasste zweite Kassette (6) aufweisen, wobei die erste und die zweite Kassette (6) voneinander verschieden sind, die U-förmigen Elemente (12) der Frontpartien (1) für die Fahrzeuge der ersten und der zweiten Serie sämtlich identisch sind, und die oberen Träger (10) der Frontpartien (1) für die Fahrzeuge der ersten und der zweiten Serie sämtlich identisch sind.

9. Verfahren für den Zusammenbau von Frontpartien (1) nach einem der Ansprüche 1 bis 8 für eine erste Serie und eine zweite Serie von Fahrzeugen mit jeweils voneinander verschiedenen Motorausrüstungen,
wobei das Verfahren die folgenden Schritte umfasst:
- Bereitstellen von sämtlich identischen U-förmigen Elementen (12) und sämtlich identischen oberen Trägern (10),
- Bereitstellen von mindestens einer an die erste Motorausrüstung angepassten ersten Kassette (6) und mindestens einer an die zweite Motorausrüstung angepassten zweiten Kassette (6), wobei die erste und die zweite Kassette (6) voneinander verschieden sind,
- Montieren von mindestens einer für ein Fahrzeug der ersten Serie bestimmten Frontpartie (1) durch Befestigen der bzw. jeder ersten Kassette (6) an einem der U-förmigen Elemente (12) und anschließendes Befestigen von einem der oberen Träger (10) an dem U-förmigen Element; und
- Montieren von mindestens einer für ein Fahrzeug der zweiten Serie bestimmten Frontpartie (1) durch Befestigen der bzw. jeder zweiten Kassette (6) an einem der U-förmigen Elemente (12) und anschließendes Befestigen von einem der oberen Träger (10) an dem U-förmigen Element (12).
